# EUROPEAN PATENT APPLICATION

(11) **EP 2 838 217 A1**
(43) Date of publication of application: **18.02.2015**
(21) Application number: 13306148.1
(22) Date of filing: 13.08.2013
(51) Int. Cl.: H04J 14/02

(54) **Optical communication with multi-wavelength optical packet**

(71) Applicant: ALCATEL LUCENT, 92100 Boulogne-Billancourt (FR)
(72) Inventor: De Valicourt, Guilhem, 91620 NOZAY (FR); Pointurier, Yvan, 91620 NOZAY (FR); Benzaoui, Nihel Djoher, 91620 NOZAY (FR)
(74) Representative: Loyer & Abello

(57) **Abstract**

A method for transmitting digital data comprising:
generating a multi-wavelength optical packet (P11) comprising a packet header (11) carried by a control wavelength channel and a packet payload comprising a plurality of time-synchronous payload sections (15) carried by a first group (H1) of traffic wavelength channels belonging to a grid of optical frequencies, wherein the packet header comprises control data and the payload comprises digital data to be transmitted, wherein the first group (H1) of traffic wavelength channels is made of non-adjacent wavelength channels of the grid, and
at a network node, separating the first group of traffic wavelength channels (G1) and
sending the first group of traffic wavelength channels including all time-synchronous payload sections (15) of the multi-wavelength optical packet to an optical gate, and
configuring an optical gate in one of a blocking state and a passing state as a function of the control data of the packet header (11).

## Description

### Field of the invention

The invention relates to the technical field of optical communication systems employing a packet granularity.

### Background

Optical packet switching networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels. The optical transparency of the transit path reduces dramatically the number of transponders required to make such equipment.

As a conventional Reconfigurable Optical Add Drop Multiplexer, an OPADM typically comprises an optical unit managing the transit traffic in the optical domain, dropping traffic to a drop module and adding traffic from an add module, and an electronic unit that comprises the add and drop modules and interfaces with client devices. An OPADM architecture was described in "Optical Packet Add/Drop Multiplexers for packet ring networks," Proceedings of ECOC 2008, Brussels Expo, Belgium, pp 103-106, XP001524738.

### Summary

In an embodiment, the invention provides a method for transmitting digital data in a WDM optical network operating with a grid of optical frequencies. The method comprises:
at a first network node, generating a multi-wavelength optical packet comprising a packet header carried by a control wavelength channel and a packet payload comprising a plurality of time-synchronous payload sections carried by a first group of traffic wavelength channels belonging to the grid of optical frequencies, wherein the packet header comprises control data and the payload comprises digital data to be transmitted, wherein the first group of traffic wavelength channels is made of non-adjacent wavelength channels of the grid of optical frequencies, and
sending the multi-wavelength optical packet on an optical link of the WDM optical network so as to multiplex the multi-wavelength optical packet with further optical signals carried by a second group of traffic wavelength channels belonging to the grid of optical frequencies on the optical link.

The method further comprises:
at a second network node, separating the first group of traffic wavelength channels from the second group of traffic wavelength channels and sending the first group of traffic wavelength channels including all time-synchronous payload sections of the multi-wavelength optical packet to an optical gate, and
configuring the optical gate in one of a blocking state and a passing state as a function of the control data of the packet header.

In embodiments, such a method may further comprise one or more of the following features.

In an embodiment, the control data of the packet header comprises destination data indicating a destination of the multi-wavelength optical packet.

In embodiments, the grid of optical frequencies may be an irregular grid, i.e. with a plurality of different channel spacing values, or a regular grid, i.e. with constant channel spacing.

In an embodiment, the traffic wavelength channels in the first group are evenly spaced by an integer multiple of a channel spacing of the regular grid.

In an embodiment, the method further comprises using a cyclic arrayed waveguide grating for separating the first group of traffic wavelength channels from the second group of traffic wavelength channels.

In an embodiment, the method further comprises using a two-stage wavelength mixer for separating the first group of traffic wavelength channels from the second group of traffic wavelength channels, wherein the two-stage wavelength mixer comprises a first-stage wavelength demultiplexer adapted to separate individual wavelength channels of the grid to provide the individual wavelength channels on a plurality of output ports, and a second-stage wavelength multiplexer comprising a plurality of input ports connected to a subset of the plurality of output ports of the first-stage wavelength demultiplexer so as to receive only the traffic wavelength channels of the first group and an output port connected to the optical gate.

In an embodiment, the invention also provides an optical packet switching node for a WDM optical network operating with a grid of optical frequencies. The optical packet switching node comprises:
an input section for receiving a plurality of wavelength-multiplexed multi-wavelength optical packets, each multi-wavelength optical packet comprising a packet header carried by a control wavelength channel and a packet payload comprising a plurality of time-synchronous payload sections carried by a group of traffic wavelength channels belonging to the grid, wherein the packet header comprises control data and the payload comprises digital data to be transmitted,
wherein the group of traffic wavelength channels of a multi-wavelength optical packet is made of non-adjacent wavelength channels of the grid, wherein the plurality of wavelength-multiplexed multi-wavelength optical packets comprises a first multi-wavelength optical packet corresponding to a first group of traffic wavelength channels and a second multi-wavelength optical packet corresponding to a second group of traffic wavelength channels disjoint from the first group of traffic wavelength channels,
a controller adapted to receive the control data of each packet header,
an output section for transmitting multi-wavelength optical packets, and
an optical transit section adapted to selectively pass multi-wavelength optical packets from the input section to the output section, wherein the optical transit section comprises:
   a wavelength demultiplexing section for separating the multi-wavelength optical packets as a function of the respective groups of traffic wavelength channels, and
   an optical gate arranged at an output of the wavelength demultiplexing section for receiving a respective group of traffic wavelength channels including all time-synchronous payload sections of a multi-wavelength optical packet,
      wherein the controller is adapted to configure the optical gate in one of a blocking state and a passing state as a function of the control data of the packet header.

In embodiments, such an optical packet switching node may further comprise one or more of the following features.

In an embodiment, it further comprises an optical packet drop section for demodulating the payload of multi-wavelength optical packets received in the input section, wherein the optical packet drop section comprises:
a wavelength demultiplexer for separating the traffic wavelength channels within the group of traffic wavelength channels, and
a plurality of optical receivers for demodulating the respective payload sections carried by the traffic wavelength channels.

In an embodiment, the optical packet drop section further comprises a plurality of client ports, a re-assembly module adapted to re-assemble the demodulated data of the payload sections into a client data frame and an electronic switch adapted to send the client data frame to a selected one of the plurality of client ports as a function of destination data of the client data frame. In an embodiment, the destination data indicates an optical switching node of the WDM network.

In an embodiment, the optical packet drop section further comprises a plurality of client ports and a wavelength-to-client mapping module adapted to send demodulated data of each payload section to a client port selected as a function of the traffic wavelength channel carrying the payload section.

In an embodiment, it further comprises an optical packet add section for generating multi-wavelength optical packets to be transmitted to the output section, wherein the optical packet add section comprises:
a plurality of modulated optical transmitters each operating at a respective traffic wavelength of a group of traffic wavelength channels for generating respective payload sections of a multi-wavelength optical packet in a time-synchronous manner, and
an optical combiner for combining the time-synchronous payload sections carried by the traffic wavelength channels into a waveguide.

In an embodiment, the optical packet add section further comprises a plurality of client ports for receiving client data frames, an aggregation module adapted to aggregate a plurality of client data frames having a same destination, and a segmentation module adapted to segment the client data frames into a plurality of client data segments and to send the client data segments to the plurality of optical transmitters of the optical packet add section for generating time-synchronous payload sections modulated with the respective client data segments. In an embodiment, the same destination of the plurality of client data frames is an optical switching node of the WDM network, e.g. as an intermediate destination prior to reaching final clients.

In an embodiment, the optical packet add section further comprises a plurality of client ports receiving client data frames and a client-to-wavelength mapping module adapted to send each client data frame to an optical transmitter of the optical packet add section selected as a function of the client port that received the client data frame.

In an embodiment, the traffic wavelength channels in a group are evenly spaced by an integer multiple of a channel spacing of the regular grid.

In an embodiment, the wavelength demultiplexing section of the optical transit section comprises a cyclic arrayed waveguide grating arranged as a demultiplexer.

In an embodiment, the optical transit section further comprises a second cyclic arrayed waveguide grating arranged as a multiplexer, wherein a plurality of the optical gates are arranged each between an output of the demultiplexer and an input of the multiplexer.

In an embodiment, the optical gate comprises a semiconductor optical amplifier (SOA). SOA components may be preferred due to their large optical bandwidth, high extinction ratio, high gain and fast switching time.

A number of other optical components may also serve as a multi-wavelength capable optical gate, such as Mach-Zehnder modulators, electro-absorption modulators and variable optical attenuators, e.g. LiNbO₃ switches, Polarized Lead Zirconium Titanate (PLZT) switches.

In embodiments, the optical packet switching node further comprises an optical receiver connected to the input section for receiving the control wavelength channel and demodulating the control data associated to the optical packets from the control wavelength channel.

Aspects of the invention are based on the idea of using a colorless optical gate to switch a multi-wavelength optical packet payload as a whole, so as to limit a number of optical switching components required in an OPADM to route the traffic. Aspects of the invention are based on the idea of limiting non-linear effects that may occur in such optical gates, e.g. in SOAs, due to cross gain or phase modulation or four-wave mixing, when all payload sections of a packet are switched together in the same optical gate.

### Brief description of the drawings

These and other aspects of the invention will be apparent from and elucidated with reference to the embodiments described hereinafter, by way of example, with reference to the drawings.
Figure 1 is a functional representation of an optical ring network in which embodiments of the invention can be used.
Figure 2 represents a time-slotted WDM packet traffic that can be used in the network of Figure 1.
Figure 3 represents a wavelength-interleaved time-slotted WDM packet traffic that can be used in the network of Figure 1.
Figure 4 is a functional representation of an OPADM that can be used in the network of Figure 1.
Figure 5 is a functional representation of a WDM packet drop module that can be used in the OPADM of Figure 4.
Figure 6 is a functional representation of a WDM packet add module that can be used in the OPADM of Figure 4.
Figures 7 and 8 are functional representations of two embodiments of a selective transit module that can be used in the OPADM of Figure 4.
Figures 9A and 9B are functional representations of an embodiment of the electronic layer that can be used in the OPADM of Figure 4, showing the operations of the electronic layer for the transmission of client traffic and for the reception of client traffic respectively.
Figures 10A and 10B are functional representations of another embodiment of the electronic layer that can be used in the OPADM of Figure 4, showing the operations of the electronic layer for the transmission of client traffic and for the reception of client traffic respectively.
Figures 11 and 12 are functional representations of two further embodiments of a selective transit module that can be used in the OPADM of Figure 4.
Figure 13 is a functional representation of another WDM packet drop module that can be used in the OPADM of Figure 4.
Figure 14 is a functional representation of another WDM packet add module that can be used in the OPADM of Figure 4.

### Detailed description of the embodiments

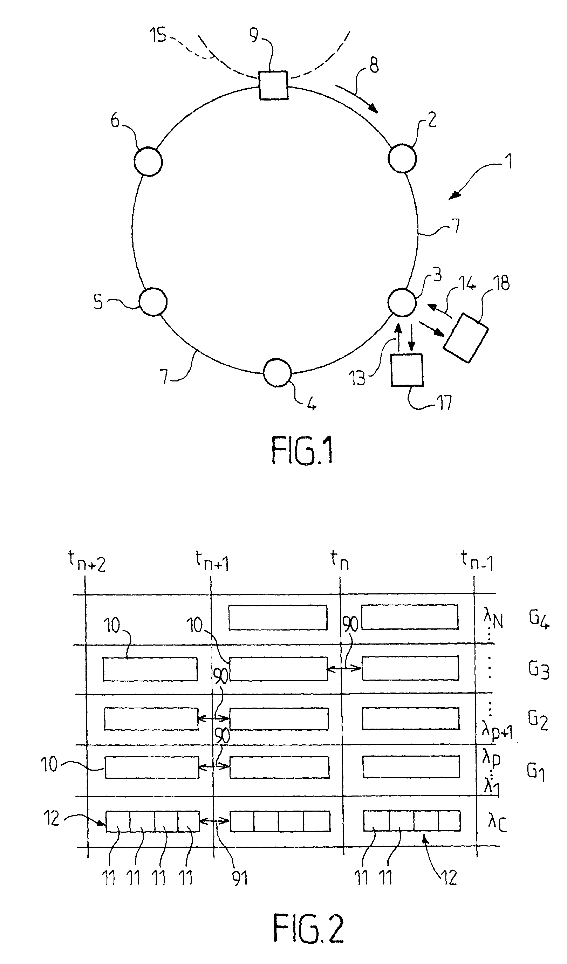

With reference to Figure 1, an optical ring network 1, which can be used in a metropolitan or access segment, comprises optical packet add-drop multiplexers (OPADM) 2, 3, 4, 5, 6 and a hub node 9 connected by optical links 7, e.g. optical fibers. Arrow 8 shows a direction of propagation of the optical packets. Alternatively, the ring could be bidirectional. The flow of data per wavelength channel is set by the rate of the optical modulators in the access nodes, for example 10 or 100 Gbit/s. Each OPADM node cooperates with client devices, depicted at numbers 17 and 18 for node 3, which provide the OPADM node with data to insert into the optical network and which recovers data extracted from the optical network by the OPADM node. Many elements other than those depicted may be involved in the construction of the network 1, for example redundant links to protect against breakdowns, a network management system, etc.

With reference to Figure 2, the ring network 1 is a time-slotted network where data is transmitted within fixed-duration packet payloads 10 over the optical links 7. Data is transmitted within optical packet payloads 10 carried on N wavelength channels of a regular frequency grid, e.g. a standard ITU frequency grid. The optical packet payloads 10 are WDM-multiplexed over the optical links 7. To each optical packet 10 payload is associated a header 11 that contains the control data of the packet, including routing information e.g., the destination. The control data may include further information such as format information e.g., the client protocol being encapsulated. Packet payloads 10 are transmitted synchronously over all wavelength channels. The packet duration is called a slot. For each slot, the headers 11 for all packet payloads 10 transmitted during that slot are transmitted as a separate optical packet 12 over a separate wavelength channel called control channel λc. Hence, data channels λ1 to AN carry optical packet payloads 10 while the control channel λc carries the headers 11 of the packets 10.

The data channels λ1 to AN are organized into a plurality of disjoint channel groups, labeled G1 to G4 in Figure 2, in which each group comprises a plurality of non-adjacent channels of the frequency grid. Each packet payload 10 is a multi-wavelength packet carried by one group of the data channels, i.e. one of the groups G1 to G4 of Figure 2. Hence, the packet payload 10 is made of a plurality of payload sections each carried by a respective wavelength channel of the group. Since the wavelength channels of the group are non-adjacent, the channel spacing within the group is larger than a channel spacing of the regular grid of frequencies. As a result, even though a dense grid of frequencies may be used, the packet payload 10 may be switched as a whole in a single optical gate while limiting non-linear effects.

On channel groups G1 to G4, each optical packet 10 is separated from the preceding by an inter-packet guard band 90. On control channel λc, the structure of traffic may be similar to or different from the data channels. Namely, the duration of guard band 91 on the control channel λc may be equal to or different from that of inter-packet guard band 90. Alternatively, the control channel may be implemented as a continuous signal with no guard band at all.

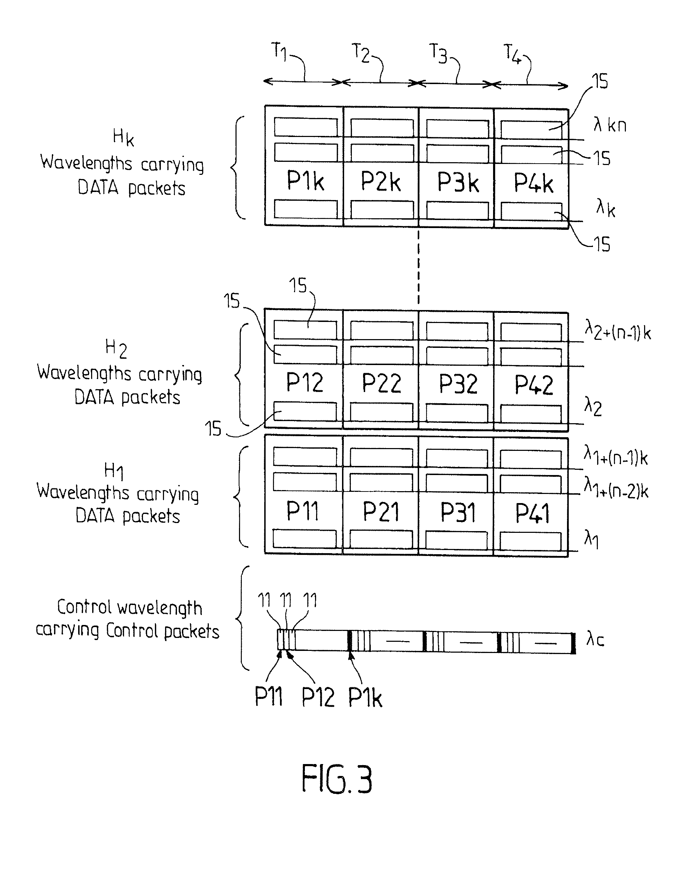

Figure 3 shows an embodiment of the channel groups using a principle of channel interleaving. Namely, the wavelength channels within one group are spaced by an integer multiple of the grid spacing, where this multiple is denoted by the integer number k>1. Hence, assuming that the channels of the frequency grid are numbered consecutively λ₁, λ₂, λ₃,... λ_{N}, and denoting by n>1 the number of channels within one group, the first group H1 is made of channels λ₁, λ₁₊ₖ, λ₁₊₂ₖ,... λ₁₊₍ₙ₋₁₎ₖ.

As in Figure 2, a packet payload is made of a plurality of payload sections 15 each carried by a respective wavelength channel of the group. Figure 3 shows k groups of wavelength channels labeled H₁ to Hₖ over four time slots labeled T₁ to T₄ for the sake of illustration. Pij denotes the packet payload carried by the group Hⱼ over the time-slot Tᵢ.

The OPADM nodes 2 to 6 of Fig.1 can insert or add traffic on any wavelength thanks to one or more fast tunable lasers, and can receive or drop traffic on specific wavelengths thanks to reconfigurable burst-mode receivers. The OPADM nodes can also let traffic pass transparently through the node, without a conversion to the electrical domain.

The hub node 9 is a different type of node which converts to electronic all the incoming optical packets on the one side, and fills all slots on all wavelengths with light, i.e. either data packets or dummy packets, on the other side. The hub node 9 can interface with another network 15 in a known manner. A dummy packet is an optical packet with no meaningful content that is used for physical layer-related purposes, namely keeping power received by the optical amplifiers roughly constant over time. In another embodiment, the optical network operates without any hub node 9.

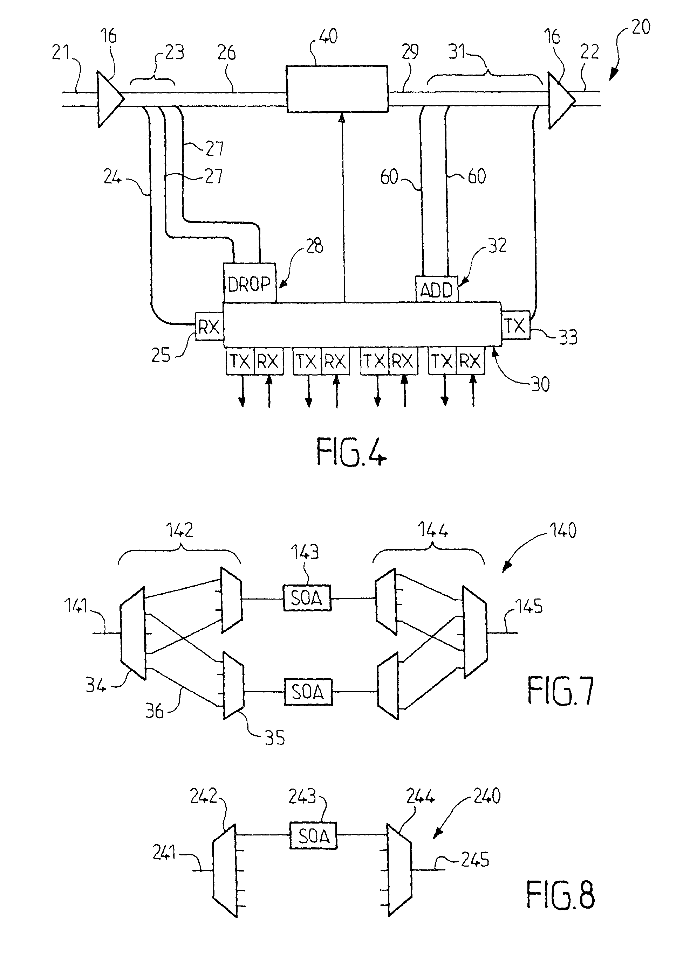

The network 1 is preferably designed so that any OPADM node can communicate with all the others in the optical field, which is to say that the network can transparently transport a data packet from the transmitter node to the receiver node. To do so, the OPADM nodes have a transparent transit section. Preferably, an OPADM node is able to extract data packets on several groups of wavelength channels. The bandwidth used for traffic destined for this node may then be allocated flexibly within a wide range as needed. Preferably, an OPADM node is able to insert data packets on several groups of wavelength channels. The transmitter node might thereby select a group of wavelength channel on which it will transmit depending upon the load on the channels. FIG. 4 depicts an embodiment of the OPADM node 20 able to meet these constraints.

Turning to Figure 4, the OPADM node 20 as shown has a single input optical fiber 21 and a single output optical fiber 22 for the sake of simplicity. It will be appreciated that the functions described below in reference to the single input and output fibers 21 and 22 may be implemented in the same manner for a plurality of optical fibers to provide an optical node with a higher degree of connectivity.

At the node input, the WDM optical signal transported by the optical fiber 21 is received and introduced into a splitter section 23. The splitter section 23 has an output 24 separately supplying the control channel reserved for signalling. Output 24 is linked to an optical packet receiver 25 to demodulate the signalling information for processing by a electronic layer 30.

An output 26 of splitter section 23 is linked to a selective transit module 40. The splitter section 23 also comprises one or more drop outputs 27 each linked to a drop module 28 for extraction.

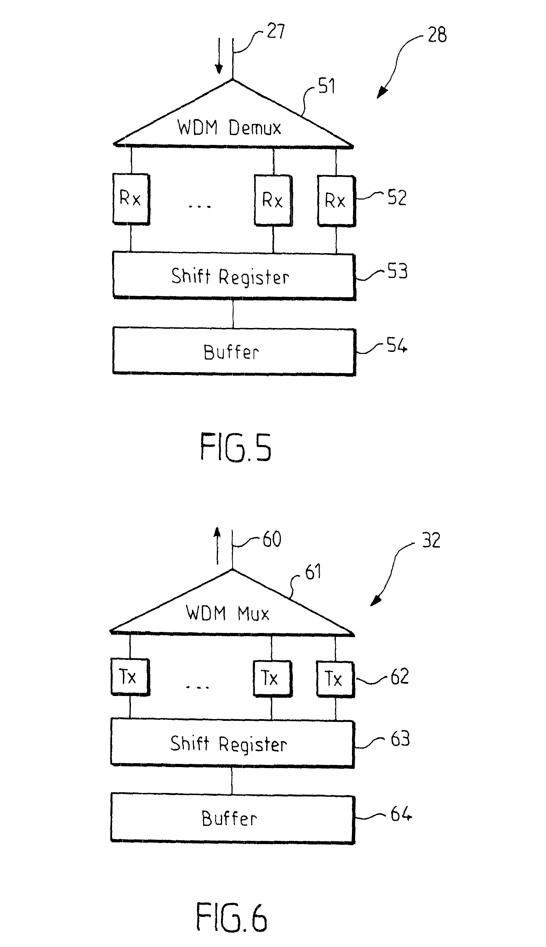

An embodiment of the drop module 28 is further depicted in Figure 5. The drop module 28 comprises a wavelength demultiplexer 51 and a plurality of optical packet receivers 52 for receiving the payload sections 15 of a packet carried by the corresponding wavelength channels of the group. Each optical packet receiver 52 demodulates the payload section of the packet and transmits the demodulated data to a shift register 53 for reassembling the respective data segments carried each payload section. The reassembled data segments form client data packets, which are then stored in a buffer 54 to be made available to client devices. An optical packet receiver 52, also known as a burst mode receiver is able to demodulate the optical data packets by adapting to the signal level of each packet, which may vary depending upon the origin of the optical packet and the distance it travelled over the network.

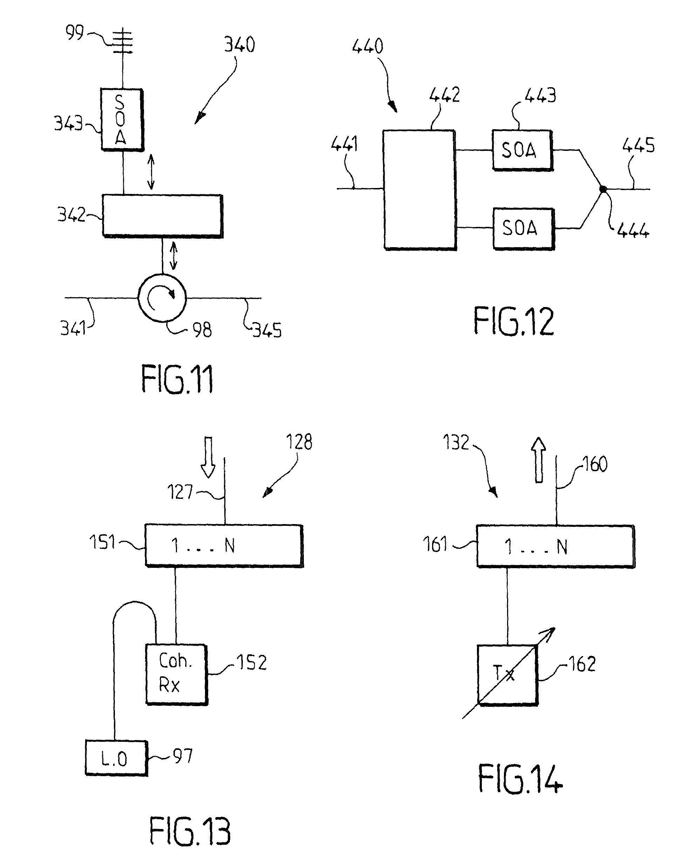

Figure 13 shows another embodiment of the drop module. Elements identical or similar to those of Fig. 5 are designated by the same numeral augmented by 100. In the drop module 128 of Fig. 13, the coherent optical receivers 152 embed local oscillators 97, which they can tune to select the desired channel to be received. Hence a wavelength demultiplexer is unnecessary and is replaced by a mere optical splitter 151, i.e. a non-colored component.

The output 29 of the selective transit module 40 is linked to a combiner section 31. The combiner section 31 combines the optical packets coming from the selective transit module 40 with optical packets coming from one or more add modules 32 through optical fibers 60 and carried by non-colliding wavelength channels, as well as with packet headers inserted by an optical transmitter 33 on the dedicated control channel, and sends the resulting spectrally multiplexed optical signal over the optical fiber 22 to the next OPADM node downstream.

An embodiment of the add module 32 is further depicted in Figure 6. The add module 32 comprises a plurality of optical packet transmitters 62 tuned to the wavelength channels of a corresponding group for generating the modulated payload sections 15 of a multi-wavelength packet. The optical packet transmitters 62 send their signals into a wavelength multiplexer 61 that outputs the multi-wavelength packet payload into optical fiber 60. A buffer 64 is accessed by client devices to write client data to be transmitted into the optical network. A shift register 63 operates to segment the client data into respective data segments to be carried each payload section of a multi-wavelength packet. Each optical packet transmitter 62 modulates one payload section of the packet with the corresponding data segment provided by the shift register 63.

Preferably, the optical packet transmitters 62 use tunable optical sources with an internal or external modulator, which makes it possible to reach the entire spectrum of wavelength channels for inserting traffic independently of the number of transmitters used. In that case, tuning of the transmitters 62 is carried out under the control of the electronic layer 30 in synchronization with the time windows available on the optical paths for packet transmission.

Figure 14 shows another embodiment of the add module. Elements identical or similar to those of Fig. 6 are designated by the same numeral augmented by 100. In the add module 132 of Fig. 14, the tunable optical transmitters 162 are connected to a mere optical coupler 161, i.e. a non-colored component.

At the input and output of the OPADM node 20, an EDFA optical amplifier 16 is depicted, mounted on the optical fibers 21 and 22 to amplify the optical signal transported over the fibers. These amplifiers 16 improve the cascadability of the node by compensating for losses incurred by the optical components, especially the demultiplexer arranged in the selective transit module 40, and optical couplers or the like arranged in the splitter section 23 and in the combiner section 31. The number of amplification stages may be adapted to existing needs in the network, which depends upon the propagation distances and the set of optical devices installed. Additionally, as the optical gate arranged in the selective transit module 40 may fulfill an amplification function for packets in transit, an amplifier 16 is not always necessary.

Turning now to Figs. 7 and 8, embodiments of the selective transit module 40 will be described.

In Fig. 7, the selective transit module 140 comprises an input fiber 141, a wavelength group separating block 142 for separating the respective wavelength groups as a function of wavelength, and a set of semiconductor optical amplifiers 143 each allocated to a respective wavelength group and serving as a fast optical gate. The SOA 143 is controlled by the electronic layer 30 to selectively block or pass each successive multi-wavelength packet payload 10 carried by the respective wavelength group to which the SOA 143 is allocated. The selective transit module 140 further comprises a wavelength group combining block 144 for recombining the respective wavelength groups downstream of the SOA gate 143 to output the transit traffic as a WDM signal on the output fiber 145.

In Fig. 7, the wavelength group separating block 142 consists of a wavelength demultiplexer 34 for individually separating each wavelength channel of the frequency grid on a respective output and a plurality of wavelength multiplexers 35, each for combining all the wavelength channels of a same group so that the corresponding multi-wavelength packet payload 10 can be switched as a whole by a single one of the SOA gates 143. Optical waveguides 36, e.g. optical fibers or integrated waveguides, are arranged between the outputs of the demultiplexer 34 and the inputs of the wavelength multiplexers 35 as a function of the composition of each wavelength group. The wavelength group combining block 144 is made with the same components as the wavelength group separating block 142, though arranged in the reverse order and direction.

With the wavelength groups based on the principle of channel interleaving, as illustrated in Fig. 3, it is possible to use a cyclic Arrayed Waveguide Grating (AWG) 242 as the wavelength group separating block and another AWG 244 as the wavelength group combining block. The AWG 242 is arranged as a demultiplexer whereas the AWG 244 is arranged as a multiplexer. A corresponding embodiment is shown on fig. 8 where elements identical or similar to those of Fig. 7 are designated by the same numeral augmented by 100. Due to its transfer function, the AWG 242 is naturally suited for separating each one of the wavelength groups H1, H2,.., Hk on a respective output port.

In a modified embodiment, especially with non-coherent receivers, the splitter section 23 of Fig. 4 is relocated between separating block 142 (resp. AWG 242) and SOAs 143 (resp. SOAs 243).

Figure 11 shows a further embodiment of the selective transit module, where elements identical or similar to those of Fig. 7 are designated by the same numeral augmented by 200. In the selective transit module 340 of Fig. 11, an optical circulator 98 is arranged to send incoming signals from the input fiber 341 to a multiplexer/demultiplexer module 342 and from the multiplexer/demultiplexer module 342 to the output fiber 345. The SOA gates 343 are each arranged between a port of the multiplexer/demultiplexer module 342 and a Bragg reflector 99 that reflects the optical signal back to the multiplexer/demultiplexer module 342. The multiplexer/demultiplexer module 342 can be implemented as the AWG 242 or as the group separating block 142, yet operating in a bidirectional manner.

Figure 12 shows a further embodiment of the selective transit module, where elements identical or similar to those of Fig. 7 are designated by the same numeral augmented by 300. In the selective transit module 440 of Fig. 12, the demultiplexer module 442 can be implemented as the AWG 242 or as the group separating block 142. However, a simple optical coupler 444 is used for recombining the respective wavelength groups downstream of the SOA gate 443.

The operation of electronic layer 30 of the OPADM node 20 is now briefly described. The electronic layer 30 receives the signaling information about the data packets arriving over the input optical fiber 21 before these packets, so as to have the time to process this information and configure the packet receivers 52, the optical gates 143, and the optical transmitters 62 in synchronization with the arrival of the packets. The signaling information about an optical packet includes, for example, the identification of the wavelength group carrying it, the identification of the destination OPADM node, and the priority level of the packet.

When the destination for an incoming packet includes the OPADM node 20, the electronic layer 30 commands a drop module 28 assigned to the corresponding wavelength group to demodulate the packet, which is to say to convert the data to electronic signals and send them to their destination, e.g. client devices. Therefore, it is possible to only demodulate the optical packets destined for the OPADM node 20, which preserves the confidentiality of the traffic in transit.

The electronic layer 30 temporarily stores the extracted data to manage competition for the client ports, reorder the packets, and transfer the packets to the client interfaces. A client interface is an electronic module that formats the data in a manner adapted to the client device connected to the client port. For example, the client interfaces are Ethernet line cards, for example with a 10 Gbit/s or other capacity. The drop of the node may be modified in modular fashion by adding or removing a client interface and/or by adding or removing a drop module 28.

The optical gates of the selective transit module 40 are controlled by the electronic layer 30 so as to set an optical gate to the pass-through state only to allow traffic in transit to subsequent OPADM nodes to pass. Therefore, when a packet received at the input 21 has a destination downstream of the OPADM node, the electronic layer 30 commands the optical gate 143 or 243 allocated to the corresponding wavelength group to allow the packet to pass. During this time window, the wavelength channel is therefore occupied and unavailable for the insertion of traffic. Similarly, multipoint traffic or that distributed to all nodes is typically passed transparently through the optical gate, which may also be used to amplify the packet signal.

When a time window does not contain any packet on a given wavelength group, the optical gate corresponding to this wavelength group remains in a blocking state. This arrangement makes it possible to limit the propagation of optical background noise that may exist in this part of the spectrum and in this time window, due, for example, to active optical components along the line upstream of the node or in the node, especially EDFA amplifiers.

There are several possible ways of organizing a mapping between the multi-wavelength packets circulating in the optical network 1 and the client flows, e.g. 13, 14 in Fig. 1, exchanged between an OPADM node and its client devices.

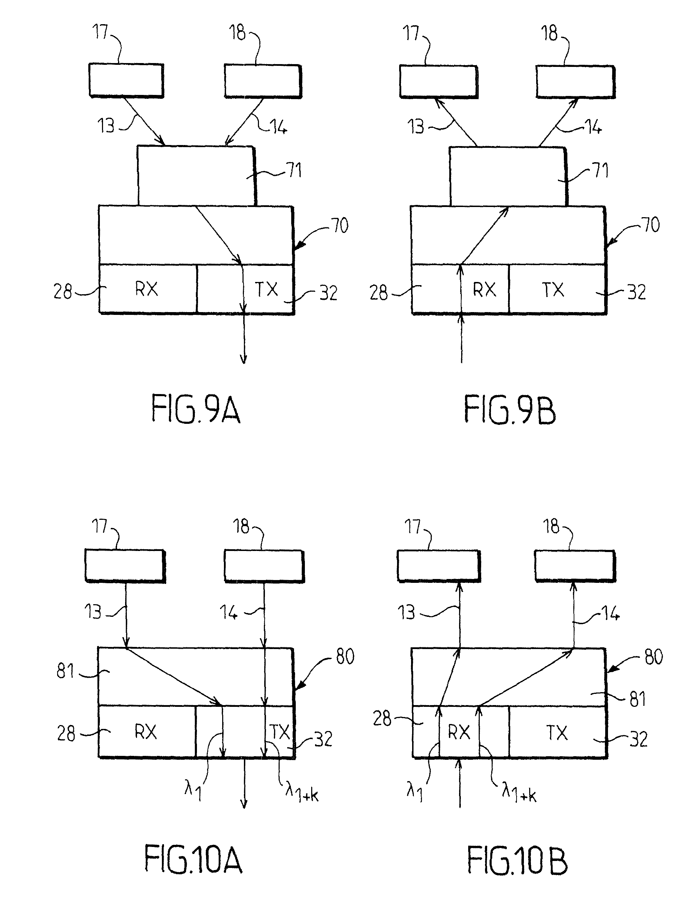

In the embodiment of FIGS. 9A and 9B, the add and drop capacity of the OPADM node is provided as one or more line cards 70, e.g. one line card shown on Figs. 9A and 9B. Line card 70 comprises an add module 32 and a drop module 28. The line card 70 is associated with a client frame granularity switch 71 that interfaces the line card 70 with a plurality of client devices 17 and 18.

In the traffic insertion operation as shown on Figure 9A, the client frame granularity switch 71 serves to aggregate client data flows 13 and 14 from the client devices 17 and 18 to constitute packet payloads that match the capacity of a multi-wavelength packet. The client frame granularity switch 71 receives the data flows 13 and 14 via input interfaces and sends the client data to frames queues according to their destinations and priority levels to form packets with a size suited to the format used in the optical network 1, and transfers these data to the add module 32 when their insertion has been determined by the electronic layer 30. The electronic layer 30 continuously monitors the properties of the traffic to be inserted, such as for example the load status of the various queues. If a packet is awaiting insertion, the electronic layer 30 commands its insertion into an available time window on a wavelength group that the destination node is able to extract. To do so, an assignment table for the wavelength groups to the various OPADM nodes on the network may be determined centrally and sent to all nodes, for example by a network management system. Proper distribution of the wavelength groups among the nodes and optimal use of the tunable transmitters should enable balancing of the traffic among the various channels. Alternatively, it may be possible to give all nodes the ability to extract packets on all channels, in which case, an assignment table is not necessary.

In the traffic extraction operation as shown on Figure 9B, the client frame granularity switch 71 serves to distribute the reassembled client data frames to the client devices 17 and 18 in accordance with their intended destination.

In the embodiment of FIGS. 10A and 10B, the add and drop capacity of the OPADM node is provided as one or more line cards 80, e.g. one line card shown on Figs. 10A and 10B. Line card 80 comprises an add module 32, a drop module 28 and a client-to-wavelength mapping module 81 that uniquely maps each client device 17, 18 to a predefined wavelength channel of the wavelength group used by the add module 32 or drop module 28.

In the traffic insertion operation as shown on Figure 10A, the client flow 13 from client device 17 is mapped to wavelength channel λ₁ whereas the client flow 14 from client device 18 is mapped to wavelength channel λ₁₊ₖ. As the granularity switch, the client-to-wavelength mapping module 81sends the client data to frame queues according to their destinations and priority levels to form packets with a size suited to the format used in the optical network 1. However, within a given packet, the association between clients and wavelength channels is predefined.

In the traffic extraction operation as shown on Figure 10B, the payload section carried on wavelength channel λ₁₊ₖ is mapped to client device 18 whereas the payload section carried on wavelength channel λ₁ is mapped to client device 17.

Therefore a dual granularity switching is achieved: a full multi-wavelength packet is routed to a given destination OPADM node whereas each individual constituent channel of the packet within a slot is associated to a predefined client device of the same OPADM node.

The available windows for traffic insertion are known by the electronic layer 30, either according to signaling and depending upon the decisions taken to erase packets in transit, or by the physical detection of the absence of traffic on a given channel (CSMA/CA method). The electronic layer 30 is also in charge of managing competition between packets in transit and inserted packets. For example, several methods may be implemented.

The optical data packets may have various formats, with a fixed or variable size. According to one form, the network 1 is designed to be able to transport data packets with several modulation formats (for example OOK, BPSK, DQPSK, and others) and/or several modulation rates (for example 10 Gb/s, 40 Gb/s, 100 Gb/s, and others). In this case, the signalling for a packet preferably comprises information about the modulation format and/or rate, so that the switching decisions for the optical packet can be taken by the electronic layers in consideration of the properties of the packet, for example to direct the packet to a suitable optical receiver at the destination node for the packet.

Preferably, fixed-size time windows are used in roughly synchronous fashion on all wavelength channels, which simplifies synchronization among OPADM nodes and reduces the quantity of information that must be exchanged to carry out this synchronization. In fact, in the case of synchronous transmission over all the wavelength channels, the nodes must simply recognize the start of the transmission window. FIG. 2 illustrates the synchronous transmission of packets on all channel groups. For example, the duration of the time window may be about 1 to 100 microseconds, advantageously close to 10 microseconds.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for transmitting digital data in a WDM optical network (1) operating with a grid of optical frequencies, comprising:
at a first network node, generating a multi-wavelength optical packet (P11) comprising a packet header (11) carried by a control wavelength channel and a packet payload (10) comprising a plurality of time-synchronous payload sections (15) carried by a first group (G1, H1) of traffic wavelength channels belonging to the grid of optical frequencies, wherein the packet header comprises control data and
the payload comprises digital data to be transmitted, wherein the first group (G1, H1) of traffic wavelength channels is made of non-adjacent wavelength channels of the grid of optical frequencies, and
sending the multi-wavelength optical packet (P11) on an optical link (7) of thy WDM optical network so as to multiplex the multi-wavelength optical packet (P11) with further optical signals carried by a second group of traffic wavelength channels (G2, H2) belonging to the grid of optical frequencies on the optical link,
at a second network node (20), separating the first group of traffic wavelength channels (G1) from the second group of traffic wavelength channels (G2) and
sending the first group of traffic wavelength channels including all time-synchronous payload sections (15) of the multi-wavelength optical packet to an optical gate (143, 243), and
configuring the optical gate (143, 243) in one of a blocking state and a passing state as a function of the control data of the packet header (11).

2. The method in accordance with claim 1, wherein the control data of the packet header (11) comprises destination data indicating a destination of the multi-wavelength optical packet (P11).

3. The method in accordance with claim 1 or 2, wherein the grid of optical frequencies is a regular grid and wherein the traffic wavelength channels in the first group (H1) are evenly spaced by an integer multiple (k) of a channel spacing of the regular grid.

4. The method in accordance with claim 3, further comprising using a cyclic arrayed waveguide grating (242) for separating the first group of traffic wavelength channels (H1) from the second group of traffic wavelength channels (H2).

5. The method in accordance with claim 3, further comprising using a two-stage wavelength mixer (142) for separating the first group (G1) of traffic wavelength channels from the second group (G2) of traffic wavelength channels, wherein the two-stage wavelength mixer comprises a first-stage wavelength demultiplexer (34) adapted to separate individual wavelength channels of the grid to provide the individual wavelength channels on a plurality of output ports, and a second-stage wavelength multiplexer (35) comprising a plurality of input ports connected to a subset of the plurality of output ports of the first-stage wavelength demultiplexer (34) so as to receive only the traffic wavelength channels of the first group (G1) and an output port connected to the optical gate (143).

6. An optical packet switching node (20) for a WDM optical network operating with a grid of optical frequencies, comprising:
an input section (21) for receiving a plurality of wavelength-multiplexed multi-wavelength optical packets (P11, P12), each multi-wavelength optical packet comprising a packet header (11) carried by a control wavelength channel and a packet payload comprising a plurality of time-synchronous payload sections (15) carried by a group (G1, G2, H1, H2) of traffic wavelength channels belonging to the grid, wherein the packet header comprises control data and the payload comprises digital data to be transmitted, wherein the group (G1, G2, H1, H2) of traffic wavelength channels of a multi-wavelength optical packet is made of non-adjacent wavelength channels of the grid, wherein the plurality of wavelength-multiplexed multi-wavelength optical packets comprises a first multi-wavelength optical packet (P11) corresponding to a first group (G1, H1) of traffic wavelength channels and a second multi-wavelength optical packet (P12) corresponding to a second group of traffic wavelength channels (G2, H2) disjoint from the first group of traffic wavelength channels, a controller (30) adapted to receive the control data of each packet header,
an output section (22) for transmitting multi-wavelength optical packets,
an optical transit section (40, 140, 240) adapted to selectively pass multi-wavelength optical packets from the input section to the output section, wherein the optical transit section comprises:
a wavelength demultiplexing section (142, 242) for separating the multi-wavelength optical packets as a function of the respective groups (G1, H1, G2, H2) of traffic wavelength channels, and
an optical gate (143, 243) arranged at an output of the wavelength demultiplexing section (142, 242) for receiving a respective group of traffic wavelength channels including all time-synchronous payload sections (15) of a multi-wavelength optical packet,
wherein the controller (30) is adapted to configure the optical gate in one of a blocking state and a passing state as a function of the control data of the packet header.

7. The optical packet switching node in accordance with claim 6, further comprising an optical packet drop section (28) for demodulating the payload of multi-wavelength optical packets received in the input section, wherein the optical packet drop section comprises:
a wavelength demultiplexer (51) for separating the traffic wavelength channels within the group of traffic wavelength channels, and
a plurality of optical receivers (52) for demodulating the respective payload sections carried by the traffic wavelength channels.

8. The optical packet switching node in accordance with claim 7, wherein the optical packet drop section further comprises a plurality of client ports, a re-assembly module (53) adapted to re-assemble the demodulated data of the payload sections into a client data frame and an electronic switch (71) adapted to send the client data frame to a selected one of the plurality of client ports as a function of destination data of the client data frame.

9. The optical packet switching node in accordance with claim 7, wherein the optical packet drop section further comprises a plurality of client ports and a wavelength-to-client mapping module (81) adapted to send demodulated data of each payload section (15) to a client port selected as a function of the traffic wavelength channel carrying the payload section.

10. The optical packet switching node in accordance with any one of claims 6 to 9, further comprising an optical packet add section (32) for generating multi-wavelength optical packets to be transmitted to the output section, wherein the optical packet add section comprises:
a plurality of modulated optical transmitters (62) each operating at a respective traffic wavelength of a group of traffic wavelength channels for generating respective payload sections of a multi-wavelength optical packet in a time-synchronous manner, and
an optical combiner (61) for combining the time-synchronous payload sections carried by the traffic wavelength channels into a waveguide (60).

11. The optical packet switching node in accordance with claim 10, wherein the optical packet add section further comprises a plurality of client ports for receiving client data frames (13, 14), an aggregation module (81) adapted to aggregate a plurality of client data frames having a same destination, and a segmentation module (63) adapted to segment the client data frames into a plurality of client data segments (15) and to send the client data segments to the plurality of optical transmitters (62) of the optical packet add section for generating time-synchronous payload sections modulated with the respective client data segments.

12. The optical packet switching node in accordance with claim 10, wherein the optical packet add section further comprises a plurality of client ports receiving client data frames (13, 14) and a client-to-wavelength mapping module (81) adapted to send each client data frame to an optical transmitter (62) of the optical packet add section selected as a function of the client port that received the client data frame.

13. The optical packet switching node in accordance with one of claims 6 to 12, wherein the wavelength demultiplexing section of the optical transit section (240) comprises a cyclic arrayed waveguide grating (242) arranged as a demultiplexer.

14. The optical packet switching node in accordance with claim 13, wherein the optical transit section (240) further comprises a second cyclic arrayed waveguide grating (244) arranged as a multiplexer, wherein a plurality of the optical gates (243) are arranged each between an output of the demultiplexer and an input of the multiplexer.

15. An optical packet switching node in accordance with one of claims 6 to 14, wherein the optical gate (143, 243) comprises a semiconductor optical amplifier.

## Amended claims

### Amended claims in accordance with Rule 137(2) EPC.

1. A method for transmitting digital data in a WDM optical network (1) operating with a grid of optical frequencies, comprising:
generating a multi-wavelength optical packet (P11) comprising a packet header (11) carried by a control wavelength channel and a packet payload (10), wherein the payload (10) comprises digital data to be transmitted, the packet payload (10) being carried synchronously by a first group (G1) of non-adjacent traffic wavelength channels of the optical frequency grid, wherein the packet header comprises control data, and
transmitting, via optical link (7) of the WDM optical network the packet payload (10) multiplexed with a second group (G2) of non-adjacent traffic wavelength channels of the optical frequency grid, disjoint from the wavelength channels of the first group (G1),
configuring a network node (20) for separating the first group (G1) of non-adjacent traffic wavelength channels from the second group (G2) of non-adjacent traffic wavelength channels and for sending the first group (G1) of non-adjacent traffic wavelength channels carrying the packet payload (10) to a colorless optical gate (143, 243), and
configuring the optical gate (143, 243) for blocking the packet payload (10) in a blocking state of the optical gate (143, 243) and for passing the packet payload (10) in a passing state of the optical gate (143, 243) as a function of the control data of the packet header (11).

2. The method in accordance with claim 1, wherein the control data of the packet header (11) comprises destination data indicating a destination of the multi-wavelength optical packet (P11).

3. The method in accordance with claim 1 or 2, wherein the grid of optical frequencies is a regular grid and wherein the traffic wavelength channels in the first group (H1) are evenly spaced by an integer multiple (k) of a channel spacing of the regular grid.

4. The method in accordance with claim 3, further comprising using a cyclic arrayed waveguide grating (242) for separating the first group of traffic wavelength channels (H1) from the second group of traffic wavelength channels (H2).

5. The method in accordance with claim 3, further comprising using a two-stage wavelength mixer (142) for separating the first group (G1) of traffic wavelength channels from the second group (G2) of traffic wavelength channels, wherein the two-stage wavelength mixer comprises a first-stage wavelength demultiplexer (34) adapted to separate individual wavelength channels of the grid to provide the individual wavelength channels on a plurality of output ports, and a second-stage wavelength multiplexer (35) comprising a plurality of input ports connected to a subset of the plurality of output ports of the first-stage wavelength demultiplexer (34) so as to receive only the traffic wavelength channels of the first group (G1) and an output port connected to the optical gate (143).

6. An optical packet switching node (20) for a WDM optical network operating with a grid of optical frequencies, comprising:
an input section (21) for receiving a WDM optical signal comprising an optical packet, the optical packet comprising a packet payload (10), wherein the payload (10) comprises digital data to be transmitted, comprising a packet header (11) comprising control data and carried by a control wavelength channel the packet payload (10) being carried synchronously by a first group (G1) of non-adjacent traffic wavelength channels of the optical frequency grid and being multiplexed with a second group (G2) of non-adjacent traffic wavelength channels of the optical frequency grid, disjoint from the wavelength channels of the first group (G1),
a controller (30) adapted to receive the control data of each packet header,
an output section (22) for transmitting a resulting WDM optical signal,
an optical transit section (40, 140, 240) comprising
a wavelength demultiplexing section (142, 242) for separating the first group (G1) of non-adjacent traffic wavelength channels from the second group (G2) of non-adjacent traffic wavelength channels, and
a colorless optical gate (143, 243) arranged at an output of the wavelength demultiplexing section (142, 242) for receiving the first group (G1) of wavelength channels carrying the packet payload(10) and for blocking the packet payload (10) in a blocking state of the optical gate (143, 243) and for passing the packet payload (10) in a passing state of the optical gate (143,243),
wherein the controller (30) is adapted to configure the optical gate in one of the blocking state and the passing state as a function of the control data of the packet header (11).

7. The optical packet switching node in accordance with claim 6, further comprising an optical packet drop section (28) for demodulating the payload of multi-wavelength optical packets received in the input section, wherein the optical packet drop section comprises:
a wavelength demultiplexer (51) for separating the traffic wavelength channels within the group of traffic wavelength channels, and
a plurality of optical receivers (52) for demodulating the respective payload sections carried by the traffic wavelength channels.

8. The optical packet switching node in accordance with claim 7, wherein the optical packet drop section further comprises a plurality of client ports, a re-assembly module (53) adapted to re-assemble the demodulated data of the payload sections into a client data frame and an electronic switch (71) adapted to send the client data frame to a selected one of the plurality of client ports as a function of destination data of the client data frame.

9. The optical packet switching node in accordance with claim 7, wherein the optical packet drop section further comprises a plurality of client ports and a wavelength-to-client mapping module (81) adapted to send demodulated data of each payload section (15) to a client port selected as a function of the traffic wavelength channel carrying the payload section.

10. The optical packet switching node in accordance with any one of claims 6 to 9, further comprising an optical packet add section (32) for generating multi-wavelength optical packets to be transmitted to the output section, wherein the optical packet add section comprises:
a plurality of modulated optical transmitters (62) each operating at a respective traffic wavelength of a group of traffic wavelength channels for generating respective payload sections of a multi-wavelength optical packet in a time-synchronous manner, and
an optical combiner (61) for combining the time-synchronous payload sections carried by the traffic wavelength channels into a waveguide (60).

11. The optical packet switching node in accordance with claim 10, wherein the optical packet add section further comprises a plurality of client ports for receiving client data frames (13, 14), an aggregation module (81) adapted to aggregate a plurality of client data frames having a same destination, and a segmentation module (63) adapted to segment the client data frames into a plurality of client data segments (15) and to send the client data segments to the plurality of optical transmitters (62) of the optical packet add section for generating time-synchronous payload sections modulated with the respective client data segments.

12. The optical packet switching node in accordance with claim 10, wherein the optical packet add section further comprises a plurality of client ports receiving client data frames (13, 14) and a client-to-wavelength mapping module (81) adapted to send each client data frame to an optical transmitter (62) of the optical packet add section selected as a function of the client port that received the client data frame.

13. The optical packet switching node in accordance with one of claims 6 to 12, wherein the wavelength demultiplexing section of the optical transit section (240) comprises a cyclic arrayed waveguide grating (242) arranged as a demultiplexer.

14. The optical packet switching node in accordance with claim 13, wherein the optical transit section (240) further comprises a second cyclic arrayed waveguide grating (244) arranged as a multiplexer, wherein a plurality of the optical gates (243) are arranged each between an output of the demultiplexer and an input of the multiplexer.

15. An optical packet switching node in accordance with one of claims 6 to 14, wherein the optical gate (143, 243) comprises a semiconductor optical amplifier.
